# FASCICULE DE BREVET EUROPEEN

(11) **EP 2 057 040 B1**
(45) Date de publication et mention de la délivrance du brevet: **28.09.2011**
(21) Numéro de dépôt: 07823630.4
(22) Date de dépôt: 24.07.2007
(51) Int. Cl.: B60R 19/18

(54) **ELEMENT DE PARE-CHOC POUR UN VEHICULE AUTOMOBILE COMPORTANT DES RAIDISSEURS EN DECALAGE**
STOSSFÄNGER FÜR EIN KRAFTFAHRZEUG MIT VERSETZTEN STOSSFÄNGERVERSTEIFERN
BUMPER FOR AN AUTOMOTIVE VEHICLE COMPRISING STAGGERED BUMPER STIFFENERS

(30) Priorité: 29.08.2006 FR 0653499
(43) Date de publication de la demande: 13.05.2009
(73) Titulaire: Renault SAS, 92100 Boulogne Billancourt (FR)
(72) Inventeur: BETTRAY, Guy, F-78280 GUYANCOURT (FR); LINGET, Jarno, F-91600 SAVIGNY SUR ORG (FR)
(86) Numéro de dépôt international: PCT/FR2007/051712
(87) Numéro de publication internationale: WO 2008/025908

(56) Documents cités:
- WO-A-01/00478
- WO-A-03/022639
- US-A- 5 727 826
- US-A1- 2005 088 011

## Description

L'invention concerne un élément de pare-choc pour un véhicule automobile.

L'invention concerne plus particulièrement un élément de pare-choc pour un véhicule automobile, du type qui comporte au moins un élément d'absorption de choc qui est solidaire d'un élément de structure de caisse du véhicule et qui est recouvert d'un bouclier, du type dans lequel l'élément d'absorption de choc présente la forme d'une poutre d'orientation sensiblement transversale par rapport à la direction axiale générale de l'élément de structure de caisse du véhicule, du type dans lequel l'élément d'absorption de choc comporte au moins deux parois transversales sensiblement parallèles reliées entre elles par une série de raidisseurs horizontaux et verticaux en forme de plaques, qui sont destinés à absorber l'énergie d'un choc d'énergie réduite, notamment un choc avec un piéton ou avec un autre véhicule.

On connaît de nombreux exemples d'éléments de pare-choc de ce type.

Le document US-A-5.727.826 décrit et représente un élément de pare-choc dans lequel l'élément d'absorption de choc comporte au moins deux parois transversales sensiblement parallèles reliées entre elles par deux raidisseurs horizontaux entre lesquels est interposée une paroi verticale intermédiaire parallèle aux deux parois verticales, afin de délimiter des caissons dans cet élément.

Le document WO-A-03/022639 décrit et représente décrit et représente un élément de pare-choc comportant des caissons longitudinaux alvéolés.

Le document US-A-2005/088011 décrit et représente un élément de pare qui comporte au moins deux parois transversales sensiblement parallèles reliées entre elles une série de raidisseurs verticaux qui traversent des parois transversales inntermédiaires, afin de délimiter des caissons dans cet élément.

Le document EP-A1-1.491.407 décrit et représente un élément de pare-choc du type décrit précédemment, qui comporte sur toute sa largeur des raidisseurs verticaux agencés à intervalles réguliers, entre lesquels sont agencés des séries de raidisseurs horizontaux parallèles qui s'étendent suivant toute la hauteur de l'élément de pare-choc.

De tels éléments de pare-choc présentent l'inconvénient de ne pouvoir se déformer que de manière limitée lorsqu'il sont soumis à un choc. En effet, les raidisseurs horizontaux ou verticaux étant agencés suivant toute la hauteur dudit élément, ils interdisent toute torsion de l'élément autour d'un raidisseur particulier, de sorte que l'élément de pare-choc n'est susceptible que de supporter des chocs d'intensité extrêmement limitée.

Pour remédier à cet inconvénient, une solution consiste par exemple à limiter le nombre de raidisseurs horizontaux qui sont agencés suivant la hauteur de l'élément d'absorption de choc entre deux raidisseurs verticaux consécutifs.

Toutefois, il importe aussi que l'élément d'absorption de chocs comporte globalement des raidisseurs horizontaux suivant toute sa hauteur, ceci afin de pouvoir résister à des chocs occasionnés par des éléments de pare-choc d'autres véhicules, dont les hauteur d'impact varient d'un véhicule à l'autre.

Dans ce but, l'invention propose un élément de pare-choc du type décrit précédemment comportant un élément d'absorption de chocs muni d'un nombre limité de raidisseurs horizontaux disposés en décalage les uns par rapport aux autres suivant la hauteur.

A cet effet, l'invention propose un élément de pare-choc du type décrit précédemment, caractérisé en ce que les raidisseurs horizontaux sont disposés en décalage les uns par rapport aux autres suivant toute la hauteur de l'élément d'absorption de choc de manière à permettre à l'élément d'absorber des chocs provenant d'éléments de pare-chocs d'autres véhicules de hauteurs diverses.

Selon d'autres caractéristiques de l'invention :
- les raidisseurs horizontaux sont agencés dans une zone centrale de l'élément d'absorption de choc,
- les raidisseurs horizontaux comportent au moins des raidisseurs horizontaux supérieurs et des raidisseurs horizontaux inférieurs,
- au moins un raidisseur horizontal inférieur est agencé de chaque côté de chaque raidisseur horizontal supérieur,
- les parois transversales, les raidisseurs verticaux et les raidisseurs horizontaux sont réalisés venus de matière par moulage d'un matériau plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un élément d'absorption de choc pour un élément de pare-choc selon l'invention,
- la figure 2 est une vue en coupe transversale de l'élément d'absorption de choc de la figure 1.

Dans la description qui va suivre, des chiffres de référence identiques désignent des pièces identiques ou ayant des fonctions similaires.

On a représenté sur les figures un élément 10 d'absorption de choc destiné à être mis en oeuvre dans un élément (non représenté) de pare-choc d'un véhicule automobile.

L'élément 10 comporte une face avant 12 qui est destinée à être recouverte d'un bouclier (non représenté) du véhicule, et une face arrière 14 qui est destinée à être fixée à un élément (non représenté) de structure de caisse du véhicule.

L'élément 10 d'absorption de chocs et le bouclier (non représenté) forment donc l'élément de pare-chocs au sens de l'invention.

L'élément 10 d'absorption de choc présente la forme d'une poutre d'orientation "T" sensiblement transversale par rapport à la direction axiale "A" générale de l'élément de structure de caisse du véhicule.

L'élément 10 d'absorption de chocs comporte au moins deux parois transversales 16, 18 sensiblement parallèles, notamment une paroi avant 16 comportant la face avant 12 et une paroi arrière 18 comportant la face arrière 14.

Les parois 16, 18 sont reliées entre elles par une série de raidisseurs horizontaux 20a, 20b et verticaux 22 qui présentent la forme de plaques, et qui sont destinés à absorber l'énergie d'un choc d'énergie réduite, notamment un choc avec un piéton ou avec un autre véhicule.

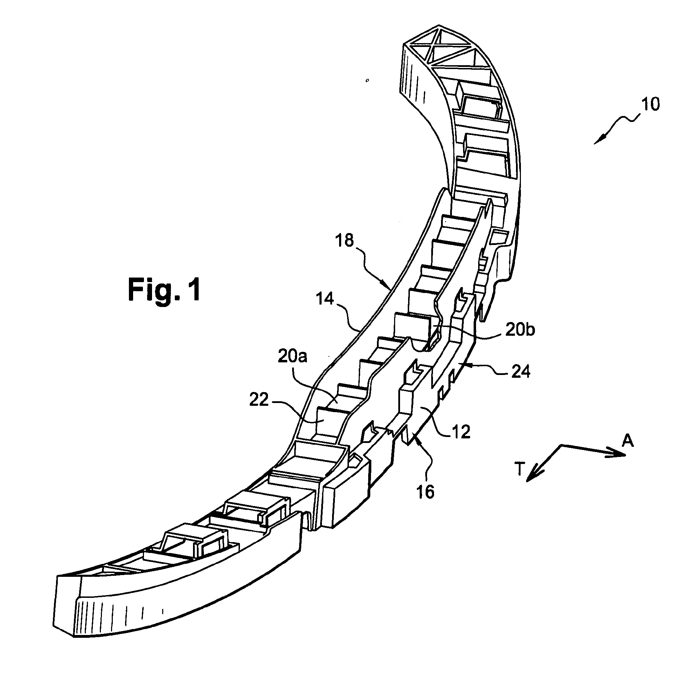

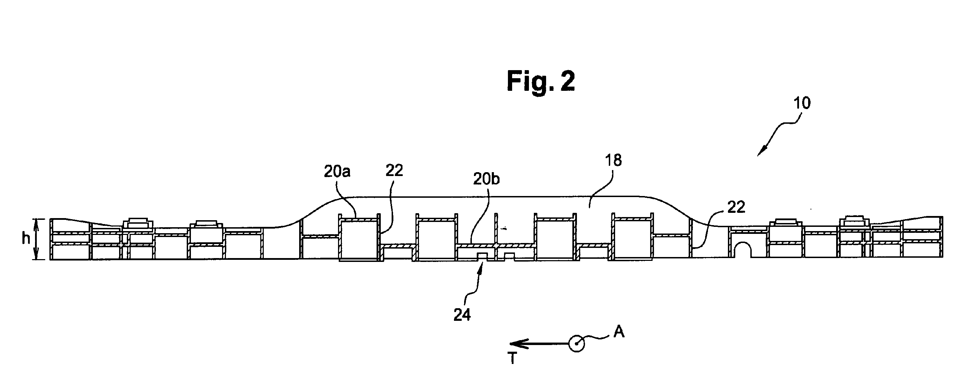

Conformément à l'invention, comme l'illustre la figure 1 et plus particulièrement la figure 2, les raidisseurs horizontaux 20a, 20b sont disposés en déclage les uns par rapport aux autres suivant toute la hauteur "h" de l'élément 10 d'absorption de choc de manière à permettre à l'élément d'absorber des chocs provenant d'éléments de pare-chocs d'autres véhicules de hauteurs diverses.

La disposition en quinconce des raidisseurs horizontaux 20a, 20b permet de conférer à l'élément 10 d'absorption de choc une rigidité globale satisfaisante tout en ne raidissant pas de manière excessive ledit élément 10 entre deux raidisseurs verticaux 22. De la sorte, l'élément 10 est susceptible de se déformer en torsion autour d'un raidisseur horizontal 20a ou 20b et par conséquent d'absorber une quantité élevée de l'énergie cinétique résultant du choc.

Dans le mode de réalisation représenté de l'invention, les raidisseurs horizontaux sont agencés dans une zone centrale 24 de l'élément 10 d'absorption de choc. Cette zone centrale 24 est celle qui est la plus sujette à des chocs, car elle correspond généralement à une partie avant en saillie de l'élément 10 du fait de la forme globale arrondie de l'élément de pare-choc, et c'est par conséquent dans cette zone que l'agencement particulier en quinconce des raidisseurs horizontaux 20 trouve tout son intérêt.

Dans le mode réalisation représenté de l'invention, et de manière non limitative de celle-ci, les raidisseurs horizontaux comportent au moins des raidisseurs horizontaux supérieurs 20a et des raidisseurs horizontaux inférieurs 20b. Cette configuration n'est pas limitative de l'invention et l'élément 10 d'absorption de choc pourrait comporter des raidisseurs de hauteur intermédiaire, pourvu qu'un seul raidisseur horizontal soit agencé entre deux raidisseurs verticaux 22 consécutifs.

De préférence, au moins un raidisseur horizontal inférieur 20b est agencé de chaque côté de chaque raidisseur horizontal supérieur 20a. Cette configuration permet d'assurer une répartition uniforme des raidisseurs horizontaux sur toute la largeur concernée de l'élément 10 d'absorption de chocs.

Enfin, dans le mode de réalisation représenté de l'invention, les parois transversales 16, 18, les raidisseurs verticaux 22 et les raidisseurs horizontaux 20a, 20b sont réalisés venus de matière par moulage d'un matériau plastique. L'élément 10 d'absorption de choc est donc d'un coût de fabrication particulièrement réduit.

L'invention propose donc un élément de pare-choc pour un véhicule automobile muni de caractéristiques élevées d'absorption de chocs, notamment en cas de choc avec un autre véhicule automobile.

## Revendications

1. Elément de pare-choc pour un véhicule automobile, qui comporte au moins un élément (10) d'absorption de choc qui est solidaire d'un élément de structure de caisse du véhicule et qui est recouvert d'un bouclier, dans lequel l'élément (10) d'absorption de choc présente la forme d'une poutre d'orientation (T) sensiblement transversale par rapport à la direction axiale (A) générale de l'élément de structure de caisse du véhicule, dans lequel l'élément (10) d'absorption de choc comporte au moins deux parois (16, 18) transversales sensiblement parallèles reliées entre elles par une série de raidisseurs horizontaux (20a, 20b) et verticaux (22) en forme de plaques, qui sont destinés à absorber l'énergie d'un choc d'énergie réduite,
**caractérisé en ce que** les raidisseurs horizontaux (20a, 20b) sont disposés en décalage les uns par rapport aux autres suivant toute la hauteur (h) de l'élément d'absorption de choc de manière à permettre à l'élément (10) d'absorber des chocs provenant d'éléments de pare-chocs d'autres véhicules de hauteurs diverses.

2. Elément de pare-choc selon la revendication 1, **caractérisé en ce que** les raidisseurs horizontaux (20a, 20b) sont agencés dans une zone centrale (24) de l'élément (10) d'absorption de choc.

3. Elément (10) selon l'une des revendications précédentes, **caractérisé en ce que** les raidisseurs horizontaux (20a, 20b) comportent au moins des raidisseurs horizontaux supérieurs (20a) et des raidisseurs horizontaux inférieurs (20b).

4. Elément (10) selon la revendication précédente, **caractérisé en ce que** au moins un raidisseur horizontal inférieur (20b) est agencé de chaque côté de chaque raidisseur horizontal supérieur (20a).

5. Elément (10) de pare-choc selon l'une quelconque des revendications précédentes, **caractérisé en ce que** les parois transversales (16, 18), les raidisseurs verticaux (22) et les raidisseurs horizontaux (20a, 20b) sont réalisés venus de matière par moulage d'un matériau plastique.

## Claims

1. Bumper element for a motor vehicle, which comprises at least one impact-absorbing element (10) which is secured to a vehicle body shell structural element and which is covered with a bumper, in which the impact-absorbing element (10) is in the form of a beam directed substantially transversally (T) with respect to the overall axial direction (A) of the vehicle body shell structural element, in which the impact-absorbing element (10) comprises at least two substantially parallel transverse walls (16, 18) joined together by a series of plate-form horizontal stiffeners (20a, 20b) and vertical stiffeners (22) which are intended to absorb the energy of a low-energy impact,
**characterized in that** the horizontal stiffeners (20a, 20b) are staggered from one another over the entire height (h) of the impact-absorbing element so as to allow the element (10) to absorb impacts from bumper elements of other vehicles of various heights.

2. Bumper element according to Claim 1, **characterized in that** the horizontal stiffeners (20a, 20b) are arranged in a central region (24) of the impact-absorbing element (10).

3. Element (10) according to either of the preceding claims, **characterized in that** the horizontal stiffeners (20a, 20b) comprise at least upper horizontal stiffeners (20a) and lower horizontal stiffeners (20b).

4. Element (10) according to the preceding claim, **characterized in that** at least one lower horizontal stiffener (20b) is arranged on each side of each upper horizontal stiffener (20a).

5. Bumper element (10) according to any one of the preceding claims, **characterized in that** the transverse walls (16, 18), the vertical stiffeners (22) and the horizontal stiffeners (20a, 20b) are formed as a one-piece plastic moulding.

## Patentansprüche

1. Stoßfängerelement für ein Kraftfahrzeug, das mindestens ein Stoßaufnahmeelement (10) umfasst, das fest mit einem Karosseriestrukturelement des Fahrzeugs verbunden ist und das mit einer Stoßleiste bedeckt ist, wobei das Stoßaufnahmeelement (10) die Form eines Trägers (T) aufweist, der im Wesentlichen quer zu der allgemeinen Axialrichtung (A) des Karosseriestrukturelements des Fahrzeugs ausgerichtet ist, wobei das Stoßaufnahmeelement (10) mindestens zwei im Wesentlichen parallele Querwände (16, 18) aufweist, die durch eine Reihe von Horizontalversteifern (20a, 20b) und Vertikalversteifern (22) in Form von Platten miteinander verbunden sind, welche die Energie eines Aufpralls mit geringer Energie aufnehmen sollen, **dadurch gekennzeichnet, dass** die Horizontalversteifer (20a, 20b) über die ganze Höhe (h) des Stoßaufnahmeelements zueinander versetzt angeordnet sind, um dem Element (10) zu gestatten, Stöße auf zunehmen, die von Stoßfängerelementen anderer Fahrzeuge verschiedener Höhe herrühren.

2. Stoßfängerelement nach Anspruch 1, **dadurch gekennzeichnet, dass** die Horizontalversteifer (20a, 20b) in einem mittleren Bereich (24) des Stoßaufnahmeelements (10) angeordnet sind.

3. Element (10) nach dem vorhergehenden Anspruch, **dadurch gekennzeichnet, dass** die Horizontalversteifer (20a, 20b) mindestens obere Horizontalversteifer (20a) und untere Horizontalversteifer (20b) umfassen.

4. Element (10) nach dem vorhergehenden Anspruch, **dadurch gekennzeichnet, dass** mindestens ein unterer Horizontalversteifer (20b) auf jeder Seite jedes oberen Horizontalversteifers (20a) angeordnet ist.

5. Stoßfängerelement (10) nach einem der vorhergehenden Ansprüche, **dadurch gekennzeichnet, dass** die Querwände (16, 18), die Vertikalversteifer (22) und die Horizontalversteifer (20a, 20b) durch Formen eines Kunststoffmaterials einstückig hergestellt sind.
